# EUROPEAN PATENT APPLICATION

(11) **EP 4 796 572 A1**
(43) Date of publication of application: **26.08.2026**
(21) Application number: 24879722.7
(22) Date of filing: 16.10.2024
(51) Int. Cl.: C08G 14/073

(54) **IMINO-GROUP-CONTAINING BENZOXAZINE MONOMER AND CURABLE RESIN COMPOSITION**

(30) Priority: 18.10.2023 JP 2023179725; 23.10.2023 US 202363545260 P
(71) Applicant: KANEKA CORPORATION, Osaka-shi, Osaka 530-8288 (JP)
(72) Inventor: YOSHITAKE, Mari, Settsu-shi, Osaka 566-0072 (JP); MIYAUCHI, Masahiko, Osaka-shi, Osaka 530-8288 (JP); DE ANDA, Omar, Pasadena, Texas 77507 (US); KOTAKI, Masaya, Pasadena, Texas 77507 (US)
(74) Representative: Hoffmann Eitle
(86) International application number: PCT/JP2024/036760
(87) International publication number: WO 2025/084300

(57) **Abstract**

Provided are a novel benzoxazine monomer and a novel curable resin composition which can impart, to a cured product, degradability and heat resistance that is equal to or higher than heat resistance of conventional benzoxazine monomers. A benzoxazine monomer in accordance with an embodiment of the present invention includes a trivalent aromatic group derived from a phenol compound (A) and a divalent aromatic group derived from an aromatic diamine compound (B), and is represented by a specific formula in which a terminal is capped with an aromatic ring. A curable resin composition in accordance with an embodiment of the present invention contains: a compound having a benzoxazine skeleton; and an iminophenol compound.

## Description

### Technical Field

The present invention relates to an imino group-containing benzoxazine monomer and to a curable resin composition.

### Background Art

It is known that a benzoxazine compound cures in a case where a benzoxazine ring undergoes ring opening polymerization and a reaction by heat or the like. For example, Patent Literature 1 discloses a curable resin composition containing a benzoxazine compound. Patent Literature 1 also discloses a film, a prepreg, and the like each of which is obtained by use of the curable resin composition.

### Citation List

### [Patent Literature]

[Patent Literature 1]
Japanese Patent Application Publication Tokukai No. 2014-148562

### Summary of Invention

### Technical Problem

However, in general, since a benzoxazine compound irreversibly cures, a cured product of the benzoxazine compound cannot be easily degraded. Therefore, a conventional benzoxazine compound as described above has room for improvement in terms of degradability after curing. An object of an aspect of the present invention is to provide a novel benzoxazine monomer and a novel curable resin composition which can impart, to a cured product, degradability and heat resistance that is equal to or higher than heat resistance of conventional benzoxazine monomers.

### Solution to Problem

In order to attain the above object, a benzoxazine monomer in accordance with an aspect of the present invention is represented by general formula (I): 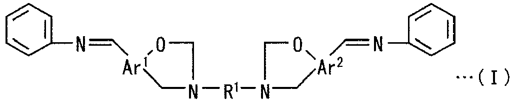 [wherein:
Ar¹ and Ar² each represent a trivalent aromatic group derived from a phenol compound (A);
Ar¹ and Ar² may be identical to or different from each other; and
R¹ represents a divalent aromatic group derived from an aromatic diamine compound (B)].

Furthermore, a curable resin composition in accordance with an aspect of the present invention contains: a compound having a benzoxazine skeleton; and an iminophenol compound.

### Advantageous Effects of Invention

An aspect of the present invention can provide a novel benzoxazine monomer and a novel curable resin composition which can impart, to a cured product, degradability and heat resistance that is equal to or higher than heat resistance of conventional benzoxazine monomers.

### Brief Description of Drawings

Fig. 1 is a diagram showing respective results of residual weight percentages in examples and comparative examples in Examples A.
Fig. 2 is a diagram showing respective results of degradability evaluation in examples and comparative examples in Examples A.
Fig. 3 is a diagram showing experimental steps in Examples B.
Fig. 4 is a diagram summarizing homogeneity of blends prepared at different temperatures according to composition of curable resin compositions in Examples B.
Fig. 5 is a diagram showing a result of thermogravimetric (TGA) measurement of an iminophenol compound.
Fig. 6 is a diagram showing a result of differential scanning calorimetry (DSC) analysis of the iminophenol compound.
Fig. 7 is a diagram showing a result of differential scanning calorimetry (DSC) analysis of a curable resin composition.
Fig. 8 is a diagram showing a result of melt viscosity measurement of the curable resin composition.
Fig. 9 is a diagram showing a result of degree-of-cure measurement of the curable resin composition.
Fig. 10 is a diagram summarizing degradability tests in Examples B.
Fig. 11 is a diagram showing results of the degradability tests in Examples B.

### Description of Embodiments

The following description will discuss an embodiment of the present invention. Unless otherwise specified herein, a numerical range expressed as "A to B" means "not less than A (inclusive of A and greater than A) and not more than B (inclusive of B and smaller than B)".

### [Embodiment A]

### [A-1. Benzoxazine monomer]

A benzoxazine monomer in accordance with an embodiment of the present invention is represented by general formula (I):

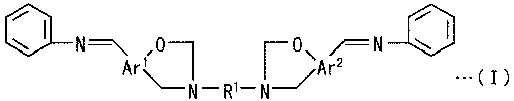

In general formula (I), Ar¹ and Ar² each represent a trivalent aromatic group derived from a phenol compound (A). In the present specification, an aromatic group is intended to mean an organic group having at least one aromatic ring. Ar¹ and Ar² may be identical to or different from each other. One type or two or more types of phenol compounds (A) may be used.

In general formula (I), R¹ represents a divalent aromatic group derived from an aromatic diamine compound (B). The divalent aromatic group which is derived from an aromatic diamine compound (B) may be a divalent aromatic group which is represented by one or more of general formulas (II) to (V) below. One type or two or more types of aromatic diamine compounds (B) may be used.

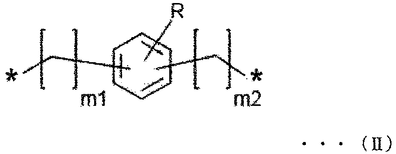

In general formula (II), asterisks each represent a bonding site. Bonds to an aromatic ring, which form a main chain except a bond between R and the aromatic ring, are in meta- or para-position. The R is a substituent on the aromatic ring and represents an aliphatic group having 1 to 10 carbon atoms. The number of Rs is 0 or 1 or more. In a case where the number of Rs is 2 or more, the Rs may be identical to or different from each other. m1 and m2 each represent 0 or 1.

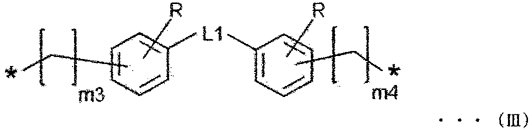

In general formula (III), asterisks each represent a bonding site. Bonds to each of two aromatic rings, which form a main chain except bonds between Rs and the two aromatic rings, are in meta- or para-position. L1 represents one or more of a single bond, an isopropylidene group, a sulfonyl group, a carbonyl group, a 9,9-fluorenyl group, an oxy group, and an alkylene group. The Rs are each a substituent on the aromatic ring and represents an aliphatic group having 1 to 10 carbon atoms. The number of Rs on each of the two aromatic rings is 0 or 1 or more. In a case where the number of Rs is 2 or more, the Rs may be identical to or different from each other. m3 and m4 each represent 0 or 1.

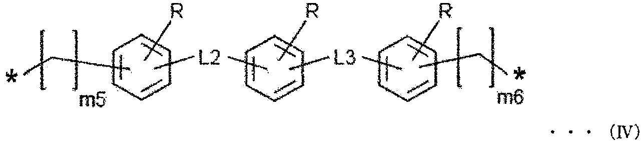

In general formula (IV), asterisks each represent a bonding site. Bonds to each of three aromatic rings, which form a main chain except bonds between Rs and the three aromatic rings, are in meta- or para-position. L2 and L3 each represent an oxy group. The Rs are substituents on the three aromatic rings and each represent an aliphatic group having 1 to 10 carbon atoms. The number of Rs on each of the three aromatic rings is 0 or 1 or more. In a case where the number of Rs is 2 or more, the Rs may be identical to or different from each other. m5 and m6 each represent 0 or 1.

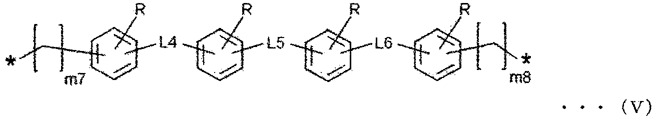

In general formula (V), asterisks each represent a bonding site. Bonds to each of four aromatic rings, which form a main chain except bonds between Rs and the four aromatic rings, are in meta- or para-position. L4 and L6 each represent an oxy group. L5 represents one or more of a single bond, an isopropylidene group, a sulfonyl group, a carbonyl group, and a 9,9-fluorenyl group. The Rs are substituents on the four aromatic rings and each represent an aliphatic group having 1 to 10 carbon atoms. The number of Rs on each of the four aromatic rings is 0 or 1 or more. In a case where the number of Rs is 2 or more, the Rs may be identical to or different from each other. m7 and m8 each represent 0 or 1.

In other words, the aromatic diamine compound (B) is represented by any of general formulas (IIa) to (Va) below. In general formulas (IIa) to (Va), definitions of L1 to L6, R, and m1 to m8 are the same as those in general formulas (II) to (V).

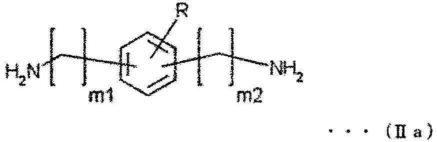

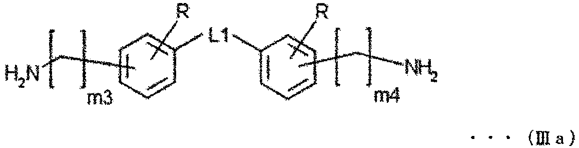

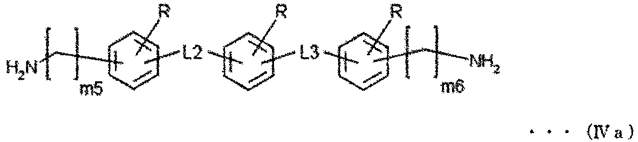

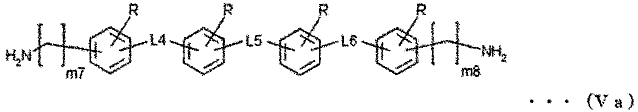

From the viewpoint of availability and ease of synthesis of the benzoxazine monomer, the aromatic diamine compound (B) is preferably at least one selected from the group consisting of 4,4'-oxydianiline, 3,3'-methylenedianiline, 4,4'-methylenedianiline, 1,4-diaminobenzene, 1,3-diaminobenzene, 2,4-diaminotoluene, 2,6-diaminotoluene, 3-(aminomethyl)benzylamine, 4-(aminomethyl)benzylamine, 3,3'-sulfonyldianiline, 4,4'-sulfonyldianiline, 3,3'-diaminobenzophenone, 4,4'-diaminobenzophenone, 1,3-bis(4-aminophenoxy)benzene, 1,3-bis(3-aminophenoxy)benzene, 2,2-bis[4-(4-aminophenoxy)phenyl]propane, bis[4-(4-aminophenoxy)phenyl]sulfone, 4,4'-bis(3-aminophenoxy)biphenyl, 4,4'-bis(4-aminophenoxy)biphenyl, and 9,9-bis(4-aminophenyl)fluorene. 3-(aminomethyl)benzylamine is also referred to as m-xylene-α,α'-diamine.

A benzoxazine monomer in accordance with an embodiment of the present invention has an imino group (C=N, also referred to as an imine bond) as shown in general formula (I). The imino group is a dynamic covalent bond, that is, a covalent bond which is capable of being degraded (cleaved). The benzoxazine monomer in accordance with an embodiment of the present invention can be used as a thermosetting resin. Therefore, in a cured product obtained by using the benzoxazine monomer as a thermosetting resin, it is possible to cleave the imino group under an acidic or basic condition. A method for cleaving the imino group under the acidic condition is solvolysis. Examples of a method for cleaving the imino group under the basic condition include a method in which a basic substance is added to the imino group so that the imino group undergoes a cleavage reaction or a bond exchange reaction. That is, in a case where the benzoxazine resin in accordance with an embodiment of the present invention is used as a thermosetting resin, the thermosetting resin can be chemically degraded after curing and thus low molecular weight compounds can be produced. Therefore, it is also possible to recycle, by chemical recycle or the like, the cured product. In contrast, a conventional benzoxazine compound which does not have an imino group (for example, 3,3'-(methylene-1,4-diphenylene)bis(3,4-dihydro-2H-1,3-benzoxazine) (P-d type)) does not exhibit degradability under evaluation conditions of Examples of the present application, as described in Comparative Examples which will be described later.

The phenol compound (A) is preferably a phenol compound having an aldehyde group. Examples of the phenol compound having an aldehyde group include 4-hydroxybenzaldehyde, 2-hydroxybenzaldehyde, and vanillin. In particular, from the viewpoint of ease of synthesis of the benzoxazine monomer, 4-hydroxybenzaldehyde and/or vanillin are preferable, and 4-hydroxybenzaldehyde is more preferable.

A method for producing a benzoxazine monomer in accordance with an embodiment of the present invention is not limited in particular, and, for example, the method includes: a step 1 of reacting a phenol compound (A), an aromatic diamine compound (B), and an aldehyde compound (C). The phenol compound (A) here has an aldehyde group. The aromatic diamine compound (B) is represented by one or more of general formulas (IIa) to (Va). By production using the method including the step 1, it is possible to form a benzoxazine ring. Further, the above production method includes a step 2 of: forming an aromatic ring constituting a terminal in a structure represented by formula (I) by addition of a monoamine; and forming an imino group by reacting the monoamine and an aldehyde group derived from the phenol compound (A). The monoamine in the step 2 is not limited in particular, and can be, for example, aniline. The aldehyde compound (C) is not limited in particular, but is preferably formaldehyde. The formaldehyde can be paraformaldehyde, which is a polymer, formalin, which is in the form of an aqueous solution, or the like.

In production of the benzoxazine monomer, a reaction of materials used may be performed in a solvent. Examples of the solvent include: halogen-based solvents such as chloroform; non-halogen-based aromatic hydrocarbon solvents such as toluene and xylene; ether-based solvents such as tetrahydrofuran (THF); cyclic diether-based solvents such as 1,4-dioxane and 1,3-dioxolane; high polarity and high boiling point solvents such as N,N-dimethylformamide, N,N-dimethylacetamide, N-methyl-2-pyrrolidone, N,N-diethylacetamide, N-methylcaprolactam, γ-butyrolactone, and dimethyl sulfoxide; and mixed solvents of non-halogen-based hydrocarbon solvents and aliphatic alcohol-based solvents. Examples of the aliphatic alcohol-based solvents include methanol, ethanol, propanol, and butanol (including structural isomers). From the viewpoint of suppression of a side reaction, it is preferable to use a non-halogen-based aromatic hydrocarbon solvent in the step 1 and use a halogen-based solvent in the step 2.

In production of the benzoxazine monomer, a reaction temperature of materials used is preferably 25°C to 150°C, and more preferably 40°C to 120°C. Further, a reaction time is preferably 0.5 hours to 12 hours, and more preferably 1 hour to 10 hours.

### [A-2. Composition]

Embodiments of the present invention also include a composition containing the foregoing benzoxazine monomer. The composition further contains another benzoxazine-based resin that is different from the benzoxazine monomer.

Examples of the benzoxazine-based resin that is different from the benzoxazine monomer include an aldehyde group-containing benzoxazine resin and a conventional benzoxazine resin (e.g., P-d type) having no imino group. Since the aldehyde group possessed by the aldehyde group-containing resin is considered to contribute to heat resistance, a cured product of the composition is more excellent in heat resistance by incorporating the aldehyde group-containing benzoxazine resin.

In a case where the composition in accordance with an embodiment of the present invention contains an aldehyde group-containing benzoxazine resin, the amount (g) of the benzoxazine monomer blended can be larger than the amount (g) of the aldehyde group-containing benzoxazine resin blended. By blending the benzoxazine monomer more than the aldehyde group-containing benzoxazine resin, a degradation time of a cured product of the composition becomes shorter and degradability becomes more excellent. Further, in a case where the aldehyde group-containing benzoxazine resin is blended in the composition, a production method thereof is not limited in particular, and can be, for example, a method described in Examples of the present application.

Further, the composition in accordance with an embodiment of the present invention may contain another thermosetting resin, a thermoplastic resin, and a compounding agent in addition to the benzoxazine-based resin. Examples of the another thermosetting resin include epoxy-based resins, thermosetting type modified polyphenylene ether resins, thermosetting polyimide resins, silicone resins, melamine resins, urea resins, allyl resins, phenol resins, unsaturated polyester resins, bismaleimide-based resins, alkyd resins, furan resins, polyurethane resins, and aniline resins. Examples of the thermoplastic resin include thermoplastic epoxy resins and thermoplastic polyimide resins. Examples of the compounding agent include, as necessary, flame retardants, nucleating agents, antioxidants, anti-aging agents, thermal stabilizers, photo stabilizers, ultraviolet absorbers, lubricants, auxiliary flame retardants, antistatic agents, anti-fogging agents, fillers, softeners, plasticizers, and coloring agents. Each of these agents may be used alone or two or more of these agents may be used in combination. A reactive or non-reactive solvent can also be used.

### [A-3. Uncured molded product and cured molded product]

Embodiments of the present invention also include an uncured molded product obtained by molding the foregoing benzoxazine monomer (thermosetting resin) or the foregoing composition. Further, embodiments of the present invention also include a cured molded product obtained by curing the foregoing benzoxazine monomer (thermosetting resin), the foregoing composition, or the uncured molded product.

In the present specification, the uncured molded product is intended to refer to a molded product having a degree of cure of less than 1%, and the cured molded product is intended to refer to a molded product having a degree of cure of 1% to 100%. That is, the cured molded product also includes a molded product which is cured only partially. The degree of cure can be calculated on the basis of the formula below from a ratio between an area of an exothermic peak obtained from a DSC curve of an uncured thermosetting resin and an area of an exothermic peak obtained from a DSC curve of the uncured molded product or the cured molded product. The above areas are measured by using a differential scanning calorimeter (DSC). In the formula below, the "amount of heat generated before the curing" refers to the area of an exothermic peak in the DSC curve of an uncured thermosetting resin. Meanwhile, in the formula below, the "amount of heat generated after the curing" refers to the area of an exothermic peak in the DSC curve of an uncured molded product or a cured molded product. The degree of cure [%] = 100 - {(the amount of heat generated after the curing)/(the amount of heat generated before the curing) × 100}

The dimensions and the shape of each of the uncured molded product and the cured molded product are not limited in particular. For example, each of the uncured molded product and the cured molded product has a film shape, a sheet shape, a plate shape, a block shape, or the like. The uncured molded product and the cured molded product may include another layer (for example, an adhesive layer), in addition to a layer made of the foregoing benzoxazine monomer (thermosetting resin) or the foregoing composition.

The glass transition temperature (Tg) of the uncured molded product is preferably not higher than 300°C, more preferably not higher than 250°C, and even more preferably not higher than 200°C, from the viewpoint of mechanical properties. From the viewpoint of heat resistance, the glass transition temperature of the uncured molded product is preferably not lower than 30°C, more preferably not lower than 40°C, and even more preferably not lower than 50°C.

From the viewpoint of heat resistance, the glass transition temperature of the cured molded product is preferably not lower than 150°C, more preferably not lower than 200°C, and even more preferably not lower than 220°C. The upper limit of the glass transition temperature of the cured molded product is not limited in particular, but can be, for example, not higher than 400°C.

The thermal stability of each of the uncured molded product and the cured molded product can be evaluated by a 5% weight reduction temperature (Td5). The 5% weight reduction temperature of the uncured molded product is preferably not lower than 100°C, more preferably not lower than 150°C, and even more preferably not lower than 200°C. The 5% weight reduction temperature of the cured molded product is preferably not lower than 250°C, more preferably not lower than 300°C, and even more preferably not lower than 320°C.

A method for molding the uncured molded product and the cured molded product is not limited in particular, and examples thereof include: a method in which a solution obtained by dissolving the foregoing benzoxazine monomer (thermosetting resin) or the foregoing composition in a solvent is cast on a base material and molded (casting method); and a method in which the foregoing benzoxazine monomer (thermosetting resin) or the foregoing composition is pressed and molded (pressing method). Examples of the solvent used in the casting method include N,N-dimethylformamide (DMF), tetrahydrofuran (THF), chloroform, N,N-dimethylacetamide, N-methyl-2-pyrrolidone, N,N-diethylacetamide, N-methylcaprolactam, γ-butyrolactone, cyclohexanone, dimethyl sulfoxide, cyclopentanone, 1,4-dioxane, and 1,3-dioxolane. A pressure in the pressing method is not limited in particular, and may be, for example, 0.1 MPa to 5.0 MPa.

A molding temperature of the uncured molded product (the maximum temperature in a case where the molding temperature is increased gradually) is not limited in particular, but is preferably not lower than room temperature and lower than 200°C, more preferably 40°C to 180°C, and even more preferably 60°C to 160°C. A curing temperature of the cured molded product (the maximum temperature in a case where the curing temperature is increased gradually) is not limited in particular, but is preferably 200°C to 300°C, more preferably 210°C to 280°C, and even more preferably 220°C to 260°C.

The uncured molded product can be used as a precursor to the cured molded product, and can also be used, for example, as an adhesive sheet having curability. The cured molded product can be suitably used for electronic components, electronic apparatuses, and materials of the electronic components and the electronic apparatuses. The cured molded product can also be suitably used for multilayer substrates, laminated sheets, sealants, adhesive agents, and the like which are required to have particularly excellent dielectric characteristics. Furthermore, the cured molded product can also be used for aircraft members, automobile members, construction members, and the like.

The cured molded product may contain reinforcement fibers, from the viewpoint of improvement in mechanical strength of the cured molded product. That is, the cured molded product may be obtained by impregnating reinforcement fibers with the foregoing benzoxazine monomer (thermosetting resin) or the foregoing composition. Examples of the reinforcement fibers include inorganic fibers, organic fibers, metal fibers, and hybrid reinforcement fibers which are obtained by combining any of these fibers. One type or two or more types of reinforcement fibers may be used.

Examples of the inorganic fibers include carbon fibers, graphite fibers, silicon carbide fibers, alumina fibers, tungsten carbide fibers, boron fibers, and glass fibers. Examples of the organic fibers include aramid fibers, high-density polyethylene fibers, the other general nylon fibers, and polyester fibers. Examples of the metal fibers include fibers of stainless steel and iron. Examples of the metal fibers also include carbon-coated metal fibers in which metal fibers are coated with carbon. In particular, the reinforcement fibers are preferably carbon fibers, from the viewpoint of an increase in strength of the cured molded product.

In general, the carbon fibers are subjected to sizing. The carbon fibers may be used as they are. As necessary, the fibers for which a small amount of a sizing agent is used can be used, or the sizing agent can be removed by an existing method such as an organic solvent treatment or a heat treatment. The carbon fibers may be subjected to a process in which a carbon fiber bundle is opened in advance with use of air, a roller, or the like so that impregnation with the resin between individual carbon fibers becomes easy.

The cured molded product can be used as a carbon fiber composite material. The carbon fiber composite material is also referred to as "carbon fiber reinforced plastic (CFRP)". A method for preparing the carbon fiber composite material is not limited in particular, and may be, for example, a method in which a semipreg or a prepreg each of which is a sheet obtained by impregnating carbon fibers with the resin is used or a method in which the carbon fibers (in bundled form or fabric form) are impregnated with the resin in liquid form. The cured molded product may be molded into a semipreg or a prepreg, which will be described in the section of [4. Semipreg and prepreg] below and the semipreg or the prepreg may be used to prepare the carbon fiber composite material.

Note that the carbon fiber composite material is described here as an example, but, as stated above, reinforcement fibers which can be used are not limited to the carbon fibers. That is, embodiments of the present invention also include a fiber composite material (also referred to as "reinforcement fiber composite material"), which is obtained by impregnating the reinforcement fibers with the benzoxazine monomer (the foregoing thermosetting resin) or the foregoing composition and then curing the thermosetting resin or the composition. It can be also said that the fiber composite material is a cured molded product that contains reinforcement fibers.

### [A-4. Semipreg and prepreg]

Embodiments of the present invention also include a prepreg or a semipreg each of which is obtained by impregnating reinforcement fibers with the foregoing benzoxazine monomer (thermosetting resin) or the foregoing composition. In the present specification, the semipreg means a composite obtained by partially impregnating the reinforcement fibers with the benzoxazine monomer (thermosetting resin) or the composition (semi-impregnated state) so that the reinforcement fibers and the benzoxazine monomer (thermosetting resin) or the composition are integrated. The prepreg can be obtained from the semipreg. For example, the prepreg can be obtained by further heating and melting the semipreg and thereby impregnating the reinforcement fibers with the resin. That is, in the present specification, the prepreg can be said to be one in which a degree of impregnation of the reinforcement fibers with the resin is higher than in the semipreg.

The semipreg or the prepreg may be obtained, for example, by (i) stacking the cured molded product on the top and back of a sheet in which the reinforcement fibers are impregnated with the resin in advance (reinforcement fiber plain weave material) and (ii) pressing the cured molded product and the sheet at a given temperature and a given pressure.

Although the fiber composite material which is obtained with use of only the semipreg or the prepreg in accordance with an embodiment of the present invention is described as an example in the above section of [A-3. Uncured molded product and cured molded product], the semipreg or the prepreg in accordance with an embodiment of the present invention and a prepreg or a semipreg obtained by impregnating reinforcement fibers with another resin or a composition of the another resin may be stacked together to obtain the fiber composite material. The another resin is not limited in particular, and examples thereof include the another thermosetting resin and the thermoplastic resin described in [A-2. Composition]. The composition of the another resin contains the another resin as a main component, and may further contain, for example, the another thermosetting resin (except the another resin), the thermoplastic resin (except the another resin), and the compounding agent described in [A-2. Composition]. That is, embodiments of the present invention also include a fiber composite material obtained by integrating (i) the fiber composite material which is obtained by impregnating the reinforcement fibers with the foregoing benzoxazine monomer (thermosetting resin) or the foregoing composition and curing the benzoxazine monomer (thermosetting resin) or the composition and (ii) a fiber composite material which is obtained by impregnating the reinforcement fibers with the another resin or the composition of the another resin and curing the thermosetting resin or the composition, to such a degree that these fiber composite materials cannot be separated.

A method for molding the fiber composite material is not limited in particular, and may include the steps of: obtaining a prepreg or a semipreg by impregnating reinforcement fibers with the thermosetting resin or the composition; obtaining a preliminarily cured prepreg having a degree of cure of more than 0% to 99%, by preliminarily curing the prepreg or the semipreg; and obtaining the fiber composite material by curing the preliminarily cured prepreg. In the present specification, preliminarily curing the prepreg or the semipreg means partially curing the prepreg or the semipreg. The above molding method may further include the step of deforming the prepreg or the semipreg before preliminarily curing the prepreg or the semipreg. Note, here, that the degree of cure of the preliminarily cured prepreg may be not more than 99%, preferably not more than 90%, and more preferably not more than 80%.

### [A-5. Degradation product and method for producing degradation product]

Embodiments of the present invention also include a degradation product which is obtained by degrading the foregoing cured molded product under an acidic or basic condition and which is soluble in a solvent. Note, here, that the degradation under the acidic condition is solvolysis. Examples of the degradation under the basic condition include degradation in which a basic substance is added to the imino group so that the imino group undergoes a cleavage reaction or a bond exchange reaction. Embodiments of the present invention also include a method for producing a degradation product which is soluble in a solvent, the method including the step of degrading the foregoing cured molded product under an acidic or basic condition. By degrading the cured molded product under the acidic or basic condition, it is possible to cleave the imine bond in the cured molded product and to obtain the degradation product. In the present specification, the solvolysis means cleaving the imine bond by a reaction between a solvent molecule and the imine bond to obtain the degradation product.

Examples of a method for subjecting the cured molded product to the solvolysis under the acidic condition include a method in which the cured molded product is brought into contact with an acidic solution containing an acid and a solvent. Examples of the solvent in the acidic solution include water, tetrahydrofuran (THF), and a mixed solvent thereof. Examples of the acid include acetic acid, hydrochloric acid, nitric acid, and sulfuric acid.

Examples of a method for degrading the cured molded product under the basic condition include a method in which the cured molded product is brought into contact with a basic compound (e.g., an amine compound) or a basic solution. The amine compound is not limited in particular, and examples thereof include: aromatic monoamines such as aniline; aromatic diamines such as p-phenylenediamine, 1,3-bis(4-aminophenoxy)benzene (RODA), and 4,4'-isopropylidene bis[(4-aminophenoxy)benzene] (BAPP); aliphatic monoamines such as methylamine, ethylamine, butylamine, 2-aminoethanol, 3-amino-1-propanolamine, and 4-amino-1-butanol; and aliphatic diamines such as ethylenediamine, trimethylenediamine, tetramethylenediamine, pentamethylenediamine, hexamethylenediamine, and m-xylene-α,α'-diamine (mXDA).

In the present specification, the "degradation product which is soluble in a solvent" means, at least, a degradation product which dissolves in the acidic solution that is used for the solvolysis under the acidic condition or a basic solution that is used for the degradation under the basic condition. It is possible to determine that the degradation product is dissolved in a solvent when no solid content can be visually observed. The degradation product may be redissolvable in various solvents after extracted as a solid content from the acidic solution or the basic solution. Examples of such solvents include N,N-dimethylformamide (DMF), tetrahydrofuran (THF), chloroform, N,N-dimethylacetamide, N-methyl-2-pyrrolidone, N,N-diethylacetamide, N-methylcaprolactam, γ-butyrolactone, cyclohexanone, dimethyl sulfoxide, cyclopentanone, 1,4-dioxane, 1,3-dioxolane, and acetonitrile.

In the degradation step, heating may be carried out. A heating temperature may be, for example, 40°C to 120°C. A heating time may be 5 minutes to 10 hours. In the degradation step, stirring may be carried out as necessary.

The degradation product can contain a monomer and/or an oligomer. As an example, the degradation product can contain (i) an oligomer derived from the aromatic diamine compound (B1) and the phenol compound (A) which has an aldehyde group and (ii) the aromatic diamine compound (B2). Note that the degradation product is obtained by, after curing the foregoing benzoxazine monomer (thermosetting resin) once by ring opening polymerization, degrading the cured molded product. That is, the degradation product may not contain any benzoxazine ring structure. It is also possible to obtain the benzoxazine monomer (thermosetting resin) by reacting such a degradation product again.

Note that it is inferred that the degradation product becomes soluble in a solvent by the cleavage of the imine bond. However, it is difficult to accurately ascertain a degree of the cleavage of the imine bond. It is inferred that the degradation product is a collection of various low molecular weight compounds, and it is practically difficult to chemically identify all of these compounds. Therefore, there exist circumstances under which directly defining the degradation product by its structure or properties is impossible or utterly impractical.

In a case where the cured molded product contains the reinforcement fibers, a part of the cured molded product other than the reinforcement fibers may be decomposed. In other words, in a case where the cured molded product contains the reinforcement fibers, at least a part other than the reinforcement fibers only needs to be degraded in the degradation step. Embodiments of the present invention also include a method for degrading the cured molded product, the method including the step of degrading a part other than the reinforcement fibers of the cured molded product by bringing the cured molded product containing the reinforcement fibers in contact with the acidic solution or the basic solution. Furthermore, embodiments of the present invention also include a method for recovering the reinforcement fibers, the method including the steps of: obtaining the degradation product and the reinforcement fibers by degrading the cured molded product by the degradation method above; and recovering the reinforcement fibers which have been obtained in the step of obtaining the degradation product and the reinforcement fibers.

The degradation product can be recovered and reused. For example, by drying a degradation solution (the acidic or basic solution containing the degradation product) or by mixing the degradation solution with a poor solvent and precipitating and obtaining the solid content, the degradation product can be recovered from the solvent. Subsequently, the cured molded product can also be obtained again by reacting the recovered degradation product.

In a case where the cured molded product contains the reinforcement fibers, both the degradation product and the reinforcement fibers can be recovered and reused. Specifically, the degradation product and the reinforcement fibers are first separated by filtration, centrifugation, or the like, and then recovered. Thereafter, by drying the degradation solution containing the degradation product or by mixing the degradation solution with a poor solvent and precipitating and obtaining the solid content, the degradation product can be recovered from the solvent. Furthermore, by mixing the recovered degradation product and the reinforcement fibers and reacting the degradation product, the cured molded product containing the reinforcement fibers can also be obtained again.

According to the configuration as described above, the cured molded product can be degraded and reused. This can contribute to ensuring sustainable consumption and production patterns. Therefore, it is possible to contribute to achieving and realizing, for example, Goal 12 "responsible consumption and production" of the Sustainable Development Goals (SDGs).

The present invention is not limited to the embodiments, but can be altered by a skilled person in the art within the scope of the claims. The present invention also encompasses, in its technical scope, any embodiment derived by combining technical means disclosed in differing embodiments.

### [A-6. Recap]

Embodiments of the present invention may be configured as follows.
<A-1> A benzoxazine monomer represented by general formula (I): 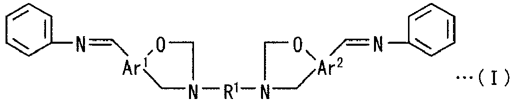 [wherein:
   Ar¹ and Ar² each represent a trivalent aromatic group derived from a phenol compound (A);
   Ar¹ and Ar² may be identical to or different from each other; and
   R¹ represents a divalent aromatic group derived from an aromatic diamine compound (B)].
<A-2> The benzoxazine monomer according to <A-1>, wherein in general formula (I), R¹ is a divalent aromatic group which is represented by one or more of general formulas (II) to (V): 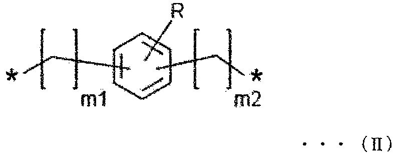 [wherein:
   asterisks each represent a bonding site;
   bonds to an aromatic ring, which form a main chain except a bond between R and the aromatic ring, are in meta- or para-position;
   the R is a substituent on the aromatic ring and represents an aliphatic group having 1 to 10 carbon atoms, the number of Rs is 0 or 1 or more, and, in a case where the number of Rs is 2 or more, the Rs may be identical to or different from each other; and
   m1 and m2 each represent 0 or 1]; 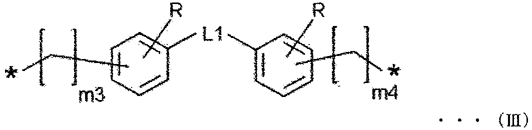 [wherein:
      asterisks each represent a bonding site;
      bonds to each of two aromatic rings, which form a main chain except bonds between Rs and the two aromatic rings, are in meta- or para-position;
      L1 represents one or more of a single bond, an isopropylidene group, a sulfonyl group, a carbonyl group, a 9,9-fluorenyl group, an oxy group, and an alkylene group;
      the Rs are substituents on the two aromatic rings and each represent an aliphatic group having 1 to 10 carbon atoms, the number of Rs on each of the two aromatic rings is 0 or 1 or more, and, in a case where the number of Rs is 2 or more, the Rs may be identical to or different from each other; and
      m3 and m4 each represent 0 or 1]; 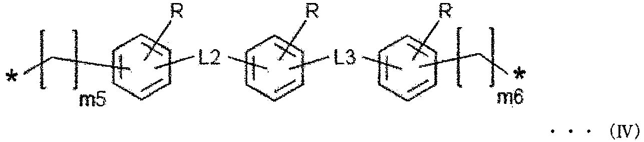 [wherein:
         asterisks each represent a bonding site;
         bonds to each of three aromatic rings, which form a main chain except bonds between Rs and the three aromatic rings, are in meta- or para-position;
         L2 and L3 each represent an oxy group;
         the Rs are substituents on the three aromatic rings and each represent an aliphatic group having 1 to 10 carbon atoms, the number of Rs on each of the three aromatic rings is 0 or 1 or more, and, in a case where the number of Rs is 2 or more, the Rs may be identical to or different from each other; and
         m5 and m6 each represent 0 or 1]; and 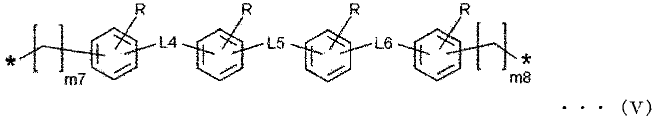 [wherein:
            asterisks each represent a bonding site;
            bonds to each of four aromatic rings, which form a main chain except bonds between Rs and the four aromatic rings, are in meta- or para-position;
            L4 and L6 each represent an oxy group;
            L5 represents one or more of a single bond, an isopropylidene group, a sulfonyl group, a carbonyl group, and a 9,9-fluorenyl group;
            the Rs are substituents on the four aromatic rings and each represent an aliphatic group having 1 to 10 carbon atoms, the number of Rs on each of the four aromatic rings is 0 or 1 or more, and, in a case where the number of Rs is 2 or more, the Rs may be identical to or different from each other; and
            m7 and m8 each represent 0 or 1].
<A-3> A composition including a benzoxazine monomer recited in <A-1> or <A-2>.
<A-4> The composition according to <A-3>, further including a benzoxazine-based resin which is different from the benzoxazine monomer.
<A-5> An uncured molded product obtained by molding a composition recited in <A-3> or <A-4>.
<A-6> A cured molded product obtained by curing a composition recited in <A-3> or <A-4>.
<A-7> A degradation product which is obtained by degrading a cured molded product recited in <A-6> under an acidic or basic condition and which is soluble in a solvent.
<A-8> A method for producing a degradation product which is soluble in a solvent, the method including the step of degrading a cured molded product recited in <A-6> under an acidic or basic condition.
<A-9> A prepreg or a semipreg each of which is obtained by impregnating reinforcement fibers with a composition recited in <A-3> or <A-4>.
<A-10> The cured molded product according to <A-6>, further including reinforcement fibers.
<A-11> A method for degrading a cured molded product, the method including the step of degrading a part other than reinforcement fibers of a cured molded product recited in <A-10> by bringing the cured molded product in contact with an acidic solution or a basic solution.
<A-12> A method for recovering reinforcement fibers, the method including the steps of:
   obtaining a degradation product and reinforcement fibers by degrading a cured molded product by a method for degrading a cured molded product recited in <A-11>; and
   recovering the reinforcement fibers which have been obtained in the step of obtaining the degradation product and the reinforcement fibers.

### [Embodiment B]

### [B-1. Curable resin composition]

A curable resin composition in accordance with an embodiment of the present invention contains: a compound having a benzoxazine skeleton; and an iminophenol compound. Note that in [Embodiment B] and [Examples B] of the present specification, the "compound having a benzoxazine skeleton" may be referred to as a "benzoxazine resin".

The compound having a benzoxazine skeleton is not limited in particular, but is preferably a compound represented by the following general formula (1) and/or a compound represented by general formula (2) below.

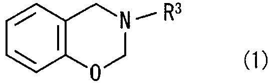

In general formula (1), R³ is a monovalent organic group composed of 1 to 20 carbon atoms and a hydrogen atom. The monovalent organic group may be a hydrocarbon group having an aromatic ring. The number of aromatic rings may be one or two or more. The aromatic ring may have a substituent. R³ is preferably a hydrocarbon group having one aromatic ring.

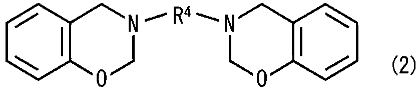

In formula (2), R⁴ is a divalent organic group composed of 1 to 30 carbon atoms and a hydrogen atom. The divalent organic group may be a hydrocarbon group having an aromatic ring. The number of aromatic rings may be one or two or more. The aromatic ring may have a substituent. R⁴ is preferably a hydrocarbon group having two aromatic rings.

The compound having a benzoxazine skeleton can be a commercially available product. Examples of the commercially available product include SR6460 manufactured by Kaneka Corporation.

In the curable resin composition in accordance with an embodiment of the present invention, the lower limit of the content of the compound having a benzoxazine skeleton is preferably not less than 40% by weight, more preferably not less than 50% by weight, and even more preferably not less than 55% by weight in a case where the weight of the curable resin composition is 100% by weight. The upper limit of the content of the compound having a benzoxazine skeleton may be, for example, less than 75% by weight in a case where the weight of the curable resin composition is 100% by weight.

The iminophenol compound is not limited in particular, provided that the iminophenol compound is a compound having an imino group and a phenol group. Examples of the iminophenol compound include 4-(phenyliminomethyl)phenol, 4-(methyliminomethyl)phenol, and 4-(ethyliminomethyl)phenol. The iminophenol compound is preferably a compound represented by the following general formula:

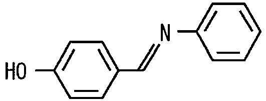

The iminophenol compound has an imino group (C=N, also referred to as an imine bond). The compound having an imino group (imino compound) acts as a cross-linker. The present inventors have found that, in a case where a benzoxazine resin is combined with an imino compound, that is, in a case where the compound having a benzoxazine skeleton is combined with the iminophenol compound, a reaction onset temperature in curing lowers, that is, a reaction of the benzoxazine resin (compound having a benzoxazine skeleton) is accelerated.

Further, the present inventors have also found that chemical degradation of the benzoxazine resin is accelerated in a case where an imino compound is blended as a cross-linker.

In addition the present inventors have found that a chemical degradation of another benzoxazine resin and another thermosetting resin, which are different from the compound having a benzoxazine skeleton in accordance with an embodiment of the present invention may be accelerated by the iminophenol compound of an embodiment of the present invention and another imino compound.

In the curable resin composition in accordance with an embodiment of the present invention, the lower limit of the content of the iminophenol compound is preferably more than 25% by weight, more preferably not less than 30% by weight, and even more preferably not less than 35% by weight in a case where the weight of the curable resin composition is 100% by weight. The upper limit of the content of the iminophenol compound is preferably not more than 60% by weight, more preferably not more than 50% by weight, and even more preferably not more than 45% by weight in a case where the weight of the curable resin composition is 100% by weight.

The curable resin composition in accordance with an embodiment of the present invention may contain another thermosetting resin, a thermoplastic resin, and a compounding agent in addition to the compound having a benzoxazine skeleton and the iminophenol compound. The another thermosetting resin, the thermoplastic resin, and the compounding agent are the same as those described in [A-2. Composition] above, and thus the description thereof will be omitted here.

A method for producing a curable resin composition in accordance with an embodiment of the present invention is not limited in particular, provided that the compound having a benzoxazine skeleton and the iminophenol compound can be reacted with each other. A reaction of materials used may be performed in a solvent or may be reacted without use of a solvent. In a case where the reaction of the materials is performed in a solvent, the solvent used can be the same as that described in [A-1. Benzoxazine monomer] above. Therefore, a description of the solvent will be omitted here.

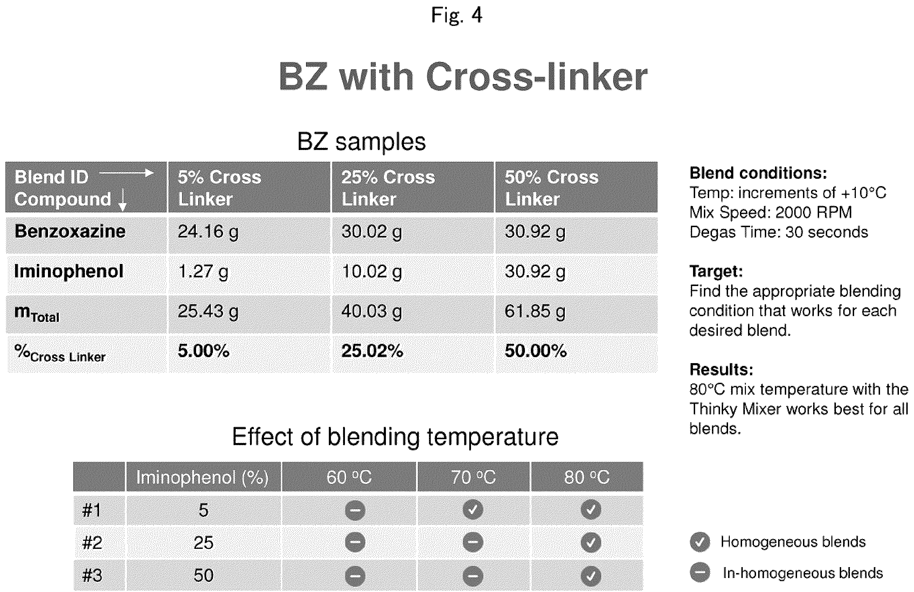

In production of the curable resin composition, a reaction temperature of the materials used may be 50°C to 100°C, and is preferably 60°C to 90°C, and more preferably 65°C to 85°C. As shown in Fig. 4, from the viewpoint of homogeneity of a mixture obtained after the reaction, the reaction temperature employed is most preferably 80°C. In production of the curable resin composition, a reaction time of the materials used is not limited in particular, provided that the materials can be homogeneously mixed, and may be, for example, 1 minute to 5 minutes.

A cured product may be prepared by curing the curable resin composition in accordance with an embodiment of the present invention. The curing temperature in a case where the cured product is prepared (the maximum temperature in a case in which the temperature is gradually increased) is not limited in particular, but is preferably 160°C to 300°C, more preferably 170°C to 280°C, and even more preferably 180°C to 260°C. The cured product obtained can be suitably used for electronic components, electronic apparatuses, and materials of the electronic components and the electronic apparatuses. The cured molded product can also be suitably used for multilayer substrates, laminated sheets, sealants, adhesive agents, and the like which are required to have particularly excellent dielectric characteristics. Furthermore, the cured molded product can also be used for aircraft members, automobile members, construction members, and the like.

Embodiments of the present invention also include an uncured molded product and a cured molded product, which are each obtained by molding the curable resin composition and a cured product thereof. Definitions, characteristics, applications, and the like of the uncured molded product and the cured molded product are the same as those of the uncured molded product and the cured molded product which are described in [A-3. Uncured molded product and cured molded product] above. Thus, the description thereof will be omitted here.

Embodiments of the present invention also include a degradation product which is obtained by degrading the cured molded product under an acidic or basic condition and which is soluble in a solvent. The definition of the "degradation product which is soluble in a solvent" is the same as that described in [A-5. Degradation product and method for producing degradation product] above, and thus the description thereof will be omitted here. Further, embodiments of the present invention also include a method for producing a degradation product which is soluble in a solvent, the method including the step of degrading the foregoing cured molded product under an acidic or basic condition. A degradation method under an acidic condition and a degradation method under a basic condition can be the same method as those described in the [A-5. Degradation product and method for producing degradation product] above, and thus the description thereof will be omitted here. In a degradation step, heating may be carried out. The lower limit of a heating temperature is, for example, preferably not lower than 80°C, preferably not lower than 100°C, and more preferably not lower than 110°C. The upper limit of the heating temperature may be not higher than 150°C, and is preferably not higher than 145°C, and not higher than 140°C. The heating temperature is most preferably 130°C. A heating time for degrading a cured product is not limited in particular, provided that the cured product can be degraded, and may be 5 minutes to 10 hours.

The curable resin composition and a cured product in accordance with an embodiment of the present invention may be a prepreg or a semipreg each of which is obtained by impregnation of reinforcement fibers. Definitions, characteristics, and the like of the prepreg and the semipreg are the same as those of the prepreg and the semipreg which are described in [A-4. Semipreg and prepreg] above. Thus, the description thereof will be omitted here.

### [B-2. Recap]

<B-1> A curable resin composition including: a compound having a benzoxazine skeleton; and an iminophenol compound.
<B-2> The curable resin composition according to <B-1>, wherein the iminophenol compound is represented by the following general formula: 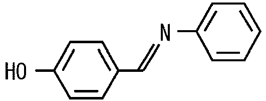
<B-3> The curable resin composition according to <B-1> or <B-2>, wherein the compound having a benzoxazine skeleton is at least one of a compound represented by the following general formula (1) and a compound represented by general formula (2) below: 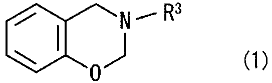
   [wherein R³ is a monovalent organic group composed of 1 to 20 carbon atoms and a hydrogen atom]; and 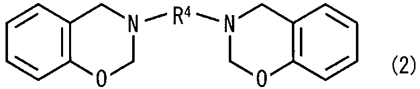
   [wherein R⁴ is a divalent organic group composed of 1 to 30 carbon atoms and a hydrogen atom].
<B-4> An uncured molded product obtained by molding a curable resin composition recited in any one of <B-1> to <B-3>.
<B-5> A cured molded product obtained by curing and molding a curable resin composition recited in any one of <B-1> to <B-3>.
<B-6> A degradation product which is obtained by degrading a cured molded product recited in <B-5> under an acidic or basic condition and which is soluble in a solvent.
<B-7> A method for producing a degradation product which is soluble in a solvent, the method comprising the step of degrading a cured molded product recited in <B-5> under an acidic or basic condition.

### Examples

The following description will discuss examples of the present invention. Note that, in the following description, a composition containing a benzoxazine compound corresponds to the thermosetting resin, and a cured film corresponds to the cured molded product.

### [Examples A]

### [Test methods]

### <Analysis of structure of composition containing benzoxazine compound>

The molecular structure of a composition containing a benzoxazine compound was analyzed. Specifically, ¹H-NMR measurement was carried out with use of a nuclear magnetic resonance device (NMR, AVANCEIII 400MHz, manufactured by Bruker) under the condition that the number of accumulations was 16 and a measurement temperature was room temperature.

### <Measurement of molecular weights of composition containing benzoxazine compound>

The molecular weights of the composition containing a benzoxazine compound were measured with use of a gel permeation chromatograph (GPC) (Prominence UFLC manufactured by Shimadzu Corporation). In this measurement, 0.01 mol/L of lithium chloride-containing N,N-dimethylformamide (DMF) was used as an eluent, three columns of TSKgel GMHHR-M which were connected in series were used, a flow rate was 1 mL/min, an injection volume was 20 µL, a column temperature was 40°C, an UV detector was used for detection, and polystyrene was used as a sample for a calibration curve.

### <Measurement of minimum melt viscosity of composition containing benzoxazine compound>

The minimum melt viscosity of the composition containing a benzoxazine compound was measured with use of a melt viscosity measurement device (ARES G2 manufactured by TA Instruments) under a condition of a temperature increase rate of 5°C/min.

### <Glass transition temperatures (Tg) of cured film>

The Tg of a cured film was measured with use of a dynamic viscoelasticity measurement device (DMA, RSA G2, manufactured by TA Instruments, tension mode) at a frequency (1 Hz) and a temperature increase rate of 5°C/min. A peak top of tan δ of a DMA curve obtained was set as Tg in the present examples.

### <Thermal stability of cured film and residual weight percentage in cured film>

Regarding the thermal stability of the cured film, a 5% weight reduction temperature (Td5) was evaluated. The Td5 was measured by thermogravimetric measurement using a thermogravimetric analyzer (STA7200, manufactured by Hitachi High-Tech Science Corporation) at a temperature increase rate of 5°C/min under a nitrogen gas stream at 200 mL/min. The residual weight percentage of the cured film at 500°C was also calculated from this analysis.

### <Degradability evaluation of cured film>

The cured film and hexamethylenediamine were added to DMF, and then an obtained solution was heated and stirred at 100°C. A state after the heating and stirring was observed, and degradability was evaluated in accordance with the following criteria. Note that "Resin/amine (weight ratio)" in Table 1 means a weight ratio of the cured film (resin) and hexamethylenediamine which had been added.
A: The cured film was dissolved (it was evaluated that the cured film exhibited degradability).
B: The cured film was not dissolved (it was evaluated that the cured film did not exhibit degradability).

### [Materials]

Materials used to produce the benzoxazine compound are shown below.

### (Phenol compound having aldehyde group)

· 4-hydroxybenzaldehyde (manufactured by FUJIFILM Wako Pure Chemical Corporation)
· 4-hydroxybenzaldehyde (manufactured by Apollo Scientific Ltd.)

### (Aromatic diamine compound)

· 1,3-bis(4-aminophenoxy)benzene (manufactured by Seika Corporation)

### (Other compounds)

· Paraformaldehyde (manufactured by FUJIFILM Wako Pure Chemical Corporation)
· Paraformaldehyde (manufactured by Thermo Fisher SCIENTIFIC Inc.)
· Aniline (manufactured by FUJIFILM Wako Pure Chemical Corporation)

Materials used in degradability evaluation of the benzoxazine compound are shown below.

### (Amine compound)

· Hexamethylenediamine (manufactured by Toray Industries, Inc.)

### [Production Example 1]

To a reaction container equipped with a stirrer, 1,3-bis(4-aminophenoxy)benzene (58.4692 g, 0.2000 mol), paraformaldehyde (25.2302 g, 0.8402 mol), 4-hydroxybenzaldehyde (48.8505 g, 0.4000 mol), and toluene (174.0641 g) were added. These were reacted for 6 hours, while being refluxed. After an obtained reaction solution (A) was cooled to room temperature, the reaction solution (A) was dropped in stirred hexane (600 mL), so that a viscous precipitate was obtained. After a supernatant was removed, the precipitate obtained was dried at 110°C under reduced pressure for 15 hours with use of a vacuum dryer to obtain an aldehyde group-containing benzoxazine compound (a), which was a reaction intermediate. The molecular weights of the obtained aldehyde group-containing benzoxazine compound (a) were measured by GPC measurement. As a result, the aldehyde group-containing benzoxazine compound (a) had a weight average molecular weight (Mw) of 1,168 and a number average molecular weight (Mn) of 927. By ¹H-NMR measurement (deuterated solvent was d6-DMSO), a decrease in peak of an aldehyde group of 4-hydroxybenzaldehyde at 9.8 ppm and generation of peaks of a benzoxazine ring at 4.7 ppm and 5.5 ppm were observed. It was confirmed from the former that the raw materials were consumed, and it was confirmed from the latter that the aldehyde group-containing benzoxazine compound (a) could be synthesized.

Subsequently, to a reaction container equipped with a stirrer, the obtained aldehyde group-containing benzoxazine compound (a) (8.0000 g, 0.0109 mol), aniline (3.0317 g, 0.0326 mol), and chloroform (25.7406 g) were added. These were reacted at 60°C for 7 hours. An obtained reaction solution (B) was cooled to room temperature, and then was dropped in stirred methanol (120 g), and then filtration was carried out. This operation was repeated once more, and then drying was carried out at 110°C under reduced pressure for 15 hours with use of a vacuum dryer to obtain a composition (1) containing an imino group-containing benzoxazine compound (b) which was a target object. The molecular weights of the obtained composition (1) were measured by GPC measurement. As a result, the obtained composition (1) had a weight average molecular weight (Mw) of 3,145 and a number average molecular weight (Mn) of 1,313. By ¹H-NMR measurement (deuterated solvent was d6-DMSO), a decrease in peak of an aldehyde terminal (derived from a reaction intermediate) at 9.8 ppm and generation of a peak of an imino group (derived from the target object) at 8.4 ppm were observed, and it was confirmed that the target object could be synthesized. Further, from an area ratio of the peak of the imino group-containing benzoxazine compound (b) at 5.5 ppm and the peak of the aldehyde group-containing benzoxazine compound (a) at 5.55 ppm, the ratio of the imino group-containing benzoxazine compound (b), which was a target object contained in the composition (1), and the aldehyde group-containing benzoxazine compound (a), which was a reaction intermediate contained in the composition (1), was calculated. The composition (1) contained 88 parts by weight of the imino group-containing benzoxazine compound (b) and 12 parts by weight of the aldehyde group-containing benzoxazine compound (a), which was a reaction intermediate, with respect to 100 parts by weight of the composition.

### [Production Example 2]

To a reaction container equipped with a stirrer, 1,3-bis(4-aminophenoxy)benzene (20.0000 g, 0.0677 mol), paraformaldehyde (8.8984 g, 0.2845 mol), 4-hydroxybenzaldehyde (16.6253 g, 0.1355 mol), and toluene (68.2856 g) were added. These were reacted for 6 hours, while being refluxed. After an obtained reaction solution (C) was cooled to room temperature, the reaction solution (C) was dropped in stirred hexane (300 mL), so that a viscous precipitate was obtained. After a supernatant was removed, the precipitate obtained was dried at 60°C under reduced pressure for 15 hours with use of a vacuum dryer to obtain an aldehyde group-containing benzoxazine compound (c), which was a reaction intermediate. The molecular weights of the obtained aldehyde group-containing benzoxazine compound (c) were measured by GPC measurement. As a result, the aldehyde group-containing benzoxazine compound (c) had a weight average molecular weight (Mw) of 1,021 and a number average molecular weight (Mn) of 877. By ¹H-NMR measurement (deuterated solvent was d6-DMSO), a decrease in peak of an aldehyde group of 4-hydroxybenzaldehyde at 9.8 ppm and generation of peaks of a benzoxazine ring at 4.7 ppm and 5.5 ppm were observed. It was confirmed from the former that the raw materials were consumed, and it was confirmed from the latter that the aldehyde group-containing benzoxazine compound (c) could be synthesized.

Subsequently, to a reaction container equipped with a stirrer, the obtained aldehyde group-containing benzoxazine compound (c) (8.0000 g, 0.0100 mol), aniline (1.5101 g, 0.0161 mol), and chloroform (22.1902 g) were added. These were reacted at 60°C for 7 hours. An obtained reaction solution (D) was cooled to room temperature, and then dried at 40°C under reduced pressure for 40 minutes with use of an evaporator. Thereafter, drying was carried out at 70°C under reduced pressure for 2 hours with use of a vacuum dryer to obtain a composition (2) containing an imino group-containing benzoxazine compound (d) which was a target object. The molecular weights of the obtained composition (2) were measured by GPC measurement. As a result, the obtained composition (2) had a weight average molecular weight (Mw) of 1,188 and a number average molecular weight (Mn) of 1,025. By ¹H-NMR measurement (deuterated solvent was d6-DMSO), a decrease in peak of an aldehyde terminal (derived from a reaction intermediate) at 9.8 ppm and generation of a peak of an imino group (derived from the target object) at 8.4 ppm were observed, and it was confirmed that the target object could be synthesized. Further, from an area ratio of the peak of the imino group-containing benzoxazine compound (d) at 5.5 ppm and the peak of the aldehyde group-containing benzoxazine compound (c) at 5.55 ppm, the ratio of the imino group-containing benzoxazine compound (d), which was a target object contained in the composition (2), and the aldehyde group-containing benzoxazine compound (c), which was a reaction intermediate contained in the composition (2), was calculated. The composition (2) contained 60 parts by weight of the imino group-containing benzoxazine compound (d) and 40 parts by weight of the aldehyde group-containing benzoxazine compound (c), which was a reaction intermediate, with respect to 100 parts by weight of the composition.

### [Production Example 3]

An aldehyde group-containing benzoxazine compound (c) (8.0000 g, 0.010 mol), aniline (1.3213 g, 0.0140 mol), and chloroform (21.7498 g) were added. These were reacted at 60°C for 7 hours. An obtained reaction solution (E) was cooled to room temperature, and then dried at 40°C under reduced pressure for 40 minutes with use of an evaporator. Thereafter, drying was carried out at 70°C under reduced pressure for 2 hours with use of a vacuum dryer to obtain a composition (3) containing an imino group-containing benzoxazine compound (e) which was a target object. The molecular weights of the obtained composition (3) were measured by GPC measurement. As a result, the obtained composition (3) had a weight average molecular weight (Mw) of 1,185 and a number average molecular weight (Mn) of 1,023. By ¹H-NMR measurement (deuterated solvent was d6-DMSO), a decrease in peak of an aldehyde terminal (derived from a reaction intermediate) at 9.8 ppm and generation of a peak of an imino group (derived from the target object) at 8.4 ppm were observed, and it was confirmed that the target object could be synthesized. Further, from an area ratio of the peak of the imino group-containing benzoxazine compound (e) at 5.5 ppm and the peak of the aldehyde group-containing benzoxazine compound (c) at 5.55 ppm, the ratio of the imino group-containing benzoxazine compound (d), which was a target object contained in the composition (3), and the aldehyde group-containing benzoxazine compound (c), which was a reaction intermediate contained in the composition (3), was calculated. The composition (3) contained 50 parts by weight of the imino group-containing benzoxazine compound (e) and 50 parts by weight of the aldehyde group-containing benzoxazine compound (c), which was a reaction intermediate, with respect to 100 parts by weight of the composition.

### [Production Example 4]

In a sample tube, 1.5 g of the composition (2) obtained in Production Example 2 and 1.5 g of a publicly known benzoxazine compound, 3,3'-(methylene-1,4-diphenylene)bis(3,4-dihydro-2H-1,3-benzoxazine) (P-d) (manufactured by Shikoku Chemicals Corporation) were put and melted at 110°C, and thus a composition (4) containing the composition (2) and P-d was obtained. The composition (2), as described above, contained 60 parts by weight of the imino group-containing benzoxazine compound (d) and 40 parts by weight of the aldehyde group-containing benzoxazine compound (c), which was a reaction intermediate, with respect to 100 parts by weight of the composition. The composition (4) contained 100 parts by weight of P-d with respect to 100 parts by weight of the composition (2).

### [Production Example 5]

In a sample tube, 1.5 g of the composition (3) obtained in Production Example 3 and 1.5 g of a publicly known benzoxazine compound, 3,3'-(methylene-1,4-diphenylene)bis(3,4-dihydro-2H-1,3-benzoxazine) (P-d) (manufactured by Shikoku Chemicals Corporation) were put and melted at 110°C, and thus a composition (5) containing the composition (3) and P-d was obtained. The composition (3), as described above, contains 50 parts by weight of the imino group-containing benzoxazine compound (e) and 50 parts by weight of the aldehyde group-containing benzoxazine compound (c), which was a reaction intermediate, with respect to 100 parts by weight of the composition. The composition (5) contains 100 parts by weight of P-d with respect to 100 parts by weight of the composition (3).

### [Example 1]

The composition (1) obtained in Production Example 1 was put in a PI film mold frame (6 cm × 4 cm) having a thickness of 125 µm, and pressed together with a polyimide film (release paper), a Teflon (registered trademark) sheet, and a stainless steel plate to obtain a cured film. As a pressing machine, AYSR-10 (manufactured by Shinto Metal Industries, Ltd.) was used. Processing conditions for obtaining the cured film were as follows: a press at 2 MPa was carried out while a temperature was increased so as to have a temperature of 190°C for 2 hours and then a temperature of 220°C for 1 hour.

### [Example 2]

The composition (2) obtained in Production Example 2 was put in a PI film mold frame (6 cm × 4 cm) having a thickness of 125 µm, and pressed together with a polyimide film (release paper), a Teflon (registered trademark) sheet, and a stainless steel plate to obtain a cured film. As a pressing machine, AYSR-10 (manufactured by Shinto Metal Industries, Ltd.) was used. Processing conditions for obtaining the cured film were as follows: a press at 2 MPa was carried out while a temperature was increased so as to have a temperature of 220°C for 1 hour.

### [Example 3]

The composition (3) obtained in Production Example 3 was put in a PI film mold frame (6 cm × 4 cm) having a thickness of 125 µm, and pressed together with a polyimide film (release paper), a Teflon (registered trademark) sheet, and a stainless steel plate to obtain a cured film. As a pressing machine, AYSR-10 (manufactured by Shinto Metal Industries, Ltd.) was used. Processing conditions for obtaining the cured film were as follows: a press at 2 MPa was carried out while a temperature was increased so as to have a temperature of 220°C for 1 hour.

### [Example 4]

The composition (4) obtained in Production Example 4 was put in a PI film mold frame (6 cm × 4 cm) having a thickness of 125 µm, and pressed together with a polyimide film (release paper), a Teflon (registered trademark) sheet, and a stainless steel plate to obtain a cured film. As a pressing machine, AYSR-10 (manufactured by Shinto Metal Industries, Ltd.) was used. Processing conditions for obtaining the cured film were as follows: a press at 2 MPa was carried out while a temperature was increased so as to have a temperature of 220°C for 1 hour.

### [Example 5]

The composition (5) obtained in Production Example 5 was put in a PI film mold frame (6 cm × 4 cm) having a thickness of 125 µm, and pressed together with a polyimide film (release paper), a Teflon (registered trademark) sheet, and a stainless steel plate to obtain a cured film. As a pressing machine, AYSR-10 (manufactured by Shinto Metal Industries, Ltd.) was used. Processing conditions for obtaining the cured film were as follows: a press at 2 MPa was carried out while a temperature was increased so as to have a temperature of 220°C for 1 hour.

### (Comparative Examples 1 and 2)

A publicly known benzoxazine compound, 3,3'-(methylene-1,4-diphenylene)bis(3,4-dihydro-2H-1,3-benzoxazine) (P-d) (manufactured by Shikoku Chemicals Corporation), was put in a PI film mold frame (6 cm × 4 cm) having a thickness of 125 µm, and pressed together with a Teflon (registered trademark) sheet (release paper) and a stainless steel plate to obtain a cured film. As a pressing machine, MINI TEST PRESS-10 (manufactured by Toyo Seiki Seisaku-sho, Ltd.) was used. Processing conditions for obtaining the cured film were as follows: a press at 5 MPa was carried out while a temperature was increased so as to have a temperature of 180°C for 30 minutes, a temperature of 200°C for 30 minutes, and then a temperature of 220°C for 2 hours.

### [Evaluation results]

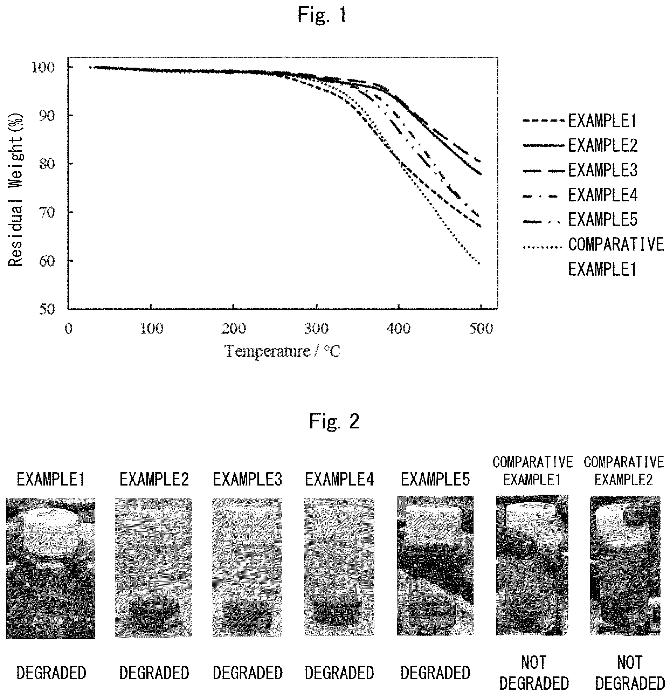

Table 1 below shows physical properties in each of Examples and Comparative Examples. Fig. 1 shows a result of thermogravimetric measurement in each of Examples and Comparative Examples.

**[Table 1]**

| | Resin used | Thermosetting resin | | | | Cured film | | | | | |
|---|---|---|---|---|---|---|---|---|---|---|---|
| | | Content in case where weight of composition is 100 parts by weight (parts by weight) | | | Minimum melt viscosity [Pa·s] | Tg [°C] | Td5 [°C] | Residual weight percentage at 500°C [%] | Resin/ amine (weight ratio) | Degradation time [h] | Degradability |
| | | IBZ compound *(1) (Target object) | ABZ compound *(2) (Reaction intermediate) | P-d | | | | | | | |
| Example 1 | Composition (1) | 88 | 12 | - | 59 | 204 | 320 | 67 | 1/1 | 1 | A |
| Example 2 | Composition (2) | 60 | 40 | - | 1.4 | 350 < | 384 | 78 | 1/20 | 4 | A |
| Example 3 | Composition (3) | 50 | 50 | - | 1 | 350 < | 389 | 81 | 1/10 | 6 | A |
| Example 4 | Composition (4) | 60 | 40 | 100 | 0.2 | 285 | 363 | 69 | 1/10 | 4 | A |
| Example 5 | Composition (5) | 50 | 50 | 100 | - | 291 | 354 | 69 | 1/10 | 4 | A |
| Comparative Example 1 | P-d | - | | | 0.06 | 204 | 330 | 59 | 1/1 | 1 | B |
| Comparative Example 2 | P-d | - | | | | | | | 1/10 | 6 | B |

| | | | | | | | | | | | |
|---|---|---|---|---|---|---|---|---|---|---|---|
| *(1) IBZ compound: imino group-containing benzoxazine compound *(2) ABZ compound: aldehyde group-containing benzoxazine compound | | | | | | | | | | | |

Table 1 and Fig 2 show a result of degradability evaluation test in each of Examples and Comparative Examples. Note that, in Fig. 2, cylindrical objects which are commonly seen in containers in Examples and Comparative Examples are stirrers. It can be observed from Fig. 2 that, only in Comparative Examples 1 and 2, a cured product further remained in the container.

It was found, from Table 1 and Fig. 2, that cured films in Examples 1 to 3 exhibited amine degradability. In addition, it was found that cured films in Examples 4 and 5, which were compositions each containing (i) a benzoxazine monomer in accordance with an embodiment of the present invention and (ii) a composition containing P-d that was a well-known benzoxazine compound, also exhibited amine degradability.

It can be considered that, despite being a cured product of a thermosetting resin, these cured films in Examples 1 to 5 each exhibited degradability due to an imine exchange reaction, with the added amine, of the dynamic covalent bond (imine bond) introduced into the main chain. Exhibiting degradability under the evaluation conditions of Examples of the present application means that low molecular weight compounds can be produced by chemically degrading a cured product of a benzoxazine compound, in other words, a cured product of a thermosetting resin. Therefore, it is also considered possible to recycle, for example, chemically recycle the cured product of the benzoxazine monomer (thermosetting resin) in accordance with an embodiment of the present invention.

In contrast, it was found that the cured films in Comparative Example 1 (degradation conditions corresponding to Example 1) and Comparative Example 2 (decomposition conditions corresponding to Examples 2 to 5) did not exhibit amine degradability. Not only these comparative examples but also a cured product of a general thermosetting resin does not have a dynamic covalent bond. Therefore, it can be considered that the cured product of a general thermosetting resin does not exhibit degradability under the evaluation conditions of Examples of the present application.

As is clear from the above, the benzoxazine monomer in accordance with an embodiment of the present invention, which contains the dynamic covalent bond (imine bond), exhibits amine degradability. It can be considered that this makes it possible to recycle the cured product in which the benzoxazine monomer in accordance with an embodiment of the present invention is used as a thermosetting resin, by degradation of the cured resin. Furthermore, it can be considered possible to recycle not only the resin but also the carbon fibers by degradation of the cured resin component in the carbon fiber composite material in which the benzoxazine monomer in accordance with an embodiment of the present invention is used as a thermosetting resin.

Further, it was also found, from Table 1, that the cured films in Examples 2 and 3 had a higher Tg and were more excellent in heat resistance than the cured film in Comparative Example 1. Moreover, it was found from Table 1 and fig. 1 that the cured films in Examples 2 and 3 had a higher Td5 and an increased residual weight percentage at 500°C than the cured film in Comparative Example 1. Thus, the cured films in Examples 2 and 3 had more excellent chemical heat resistance than the cured film in Comparative Example 1. The cured films in Example 1 had a Tg equivalent to that of the cured film in Comparative Example 1 and an improved residual weight percentage at 500°C and more excellent heat resistance as compared with the cured film in Comparative Example 1.

Further, the cured films in Example 4 (a composition containing (i) the composition (2) obtained in Production Example 2 and (ii) P-d that was a well-known benzoxazine compound) and Example 5 (a composition containing (i) the composition (3) obtained in Production Example 3 and (ii) P-d that was a well-known benzoxazine compound) also had higher Tg and Td5 and a larger residual weight percentage at 500°C than the cured film in Comparative Example 1. Thus, it can be said that the cured films in Examples 4 and 5 had more excellent heat resistance than the cured film in Comparative Example 1.

The composition (1) obtained in Production Example 1 (used in Example 1), the composition (2) obtained in Production Example 2 (used in Examples 2 and 4), and the composition (3) obtained in Production Example 3 (used in Examples 3 and 5) contain 12 parts by weight, 40 parts by weight, and 50 parts by weight of the reaction intermediate, respectively, with respect to 100 parts by weight of the composition. The reaction intermediate in Examples of the present application refers to an aldehyde group-containing benzoxazine compound, and this compound has an aldehyde group at a terminal. Therefore, it can be considered that the structures of the cured films in Examples 1 to 5, which were cross-linked by ring opening of the benzoxazine ring, also contained aldehyde groups, and this improved the heat resistance.

### [Examples B]

### <Degradability test (cross-linking with iminophenol compound)>

### [Preparation of uncured resin disc/cured resin disc (resin: benzoxazine resin)]

A benzoxazine resin and each of different contents of 0 to 50% by weight of an iminophenol compound were mixed at 80°C for 2.5 minutes by a Thinky mixer. Curable resin compositions thus obtained were defoamed for 30 seconds. As the benzoxazine resin, SR6460 which was manufactured by Kaneka Corporation was used.

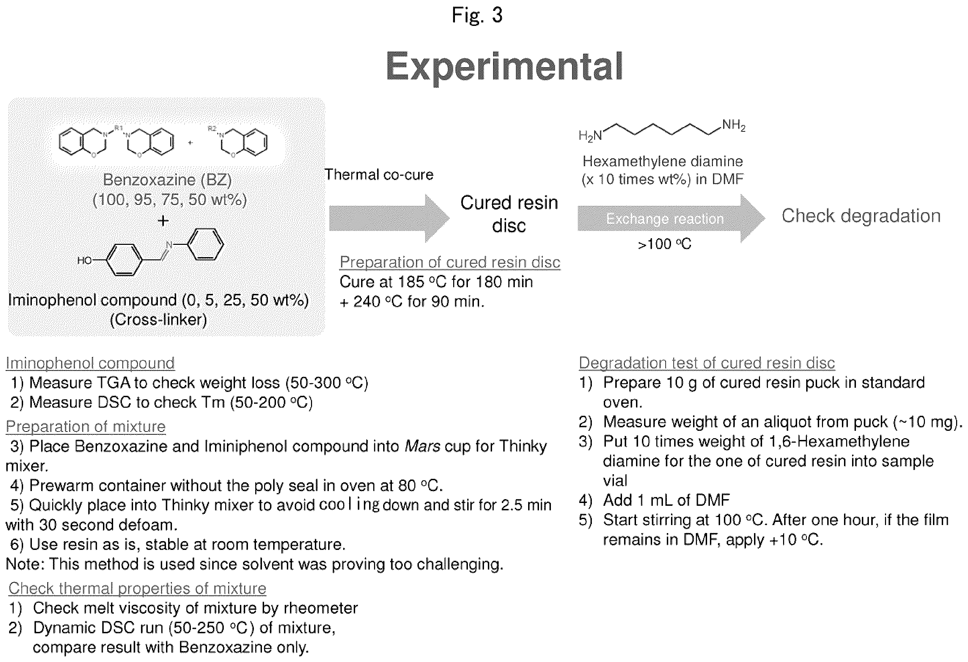

After defoaming, the curable resin compositions were cured with use of an oven at 185°C for 3 hours and then at 240°C for 1.5 hours. Thus, cured discs of the present Example were obtained. Figs. 3 and 4 also describe a preparation method, characteristics, and the like of the curable resin composition according to the present Example. Note that, in the present specification, the "cured disc(s)" can also be referred to as a "cured film(s)".

In the present degradability test, Comparative Examples 1 and 2 in the section of [Examples A] above were used as comparative examples.

### [Degradability test]

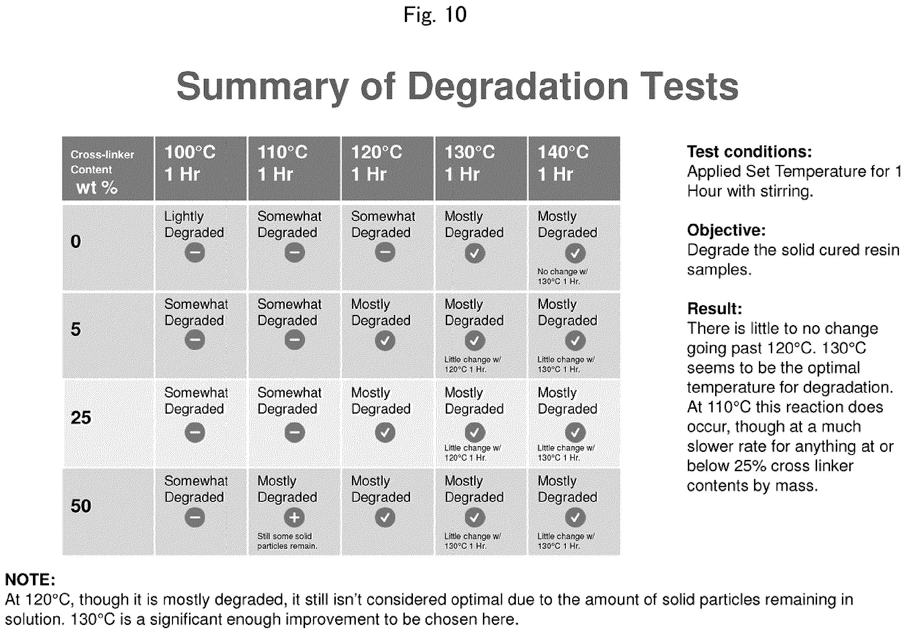

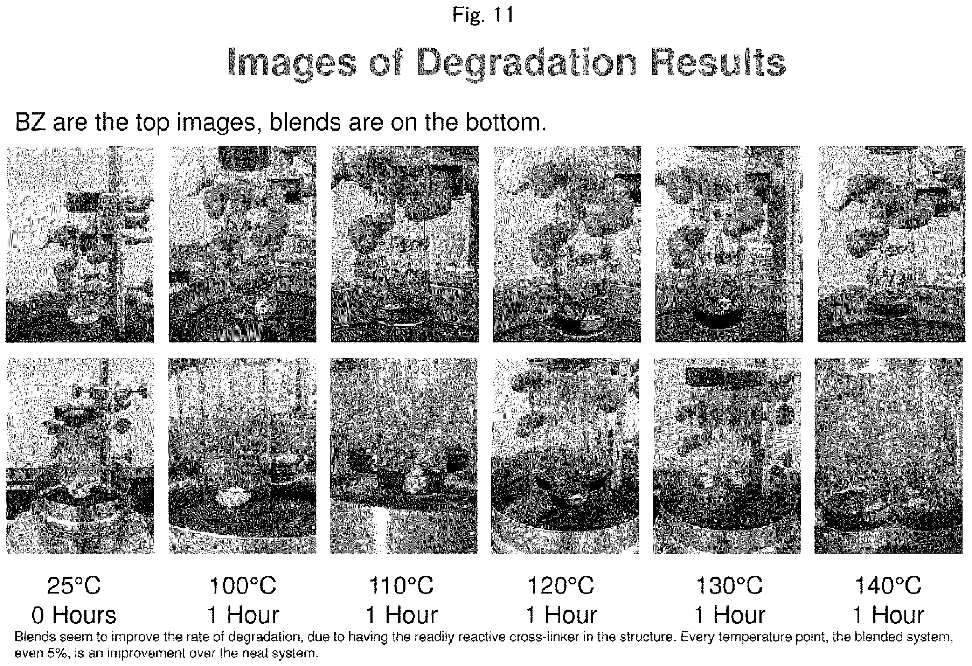

A cured disc obtained above and 1,6-hexamethylenediamine in an amount of 10 times the weight of the cured film was put in a sample vial, and 1 ml of DMF was added. Thereafter, respective resultant mixtures were stirred at different temperatures of 100°C to 140°C for 1 hour. Figs. 10 and 11 show results. "BZ" in Fig. 11 corresponds to the comparative examples in the present degradability test, and "Mixture" in Fig. 11 corresponds to examples in the present degradability test.

### <Thermogravimetric (TGA) measurement of iminophenol compound (cross-linker)>

In order to clarify the onset temperature of weight loss of the iminophenol compound and the weight loss rate of the iminophenol compound at 300°C, TGA measurement of the iminophenol compound was carried out under the following test conditions.

### Test conditions:

Ramp (temperature increase rate): 10°C/min
Range: 25°C to 300°C
Gas: N₂

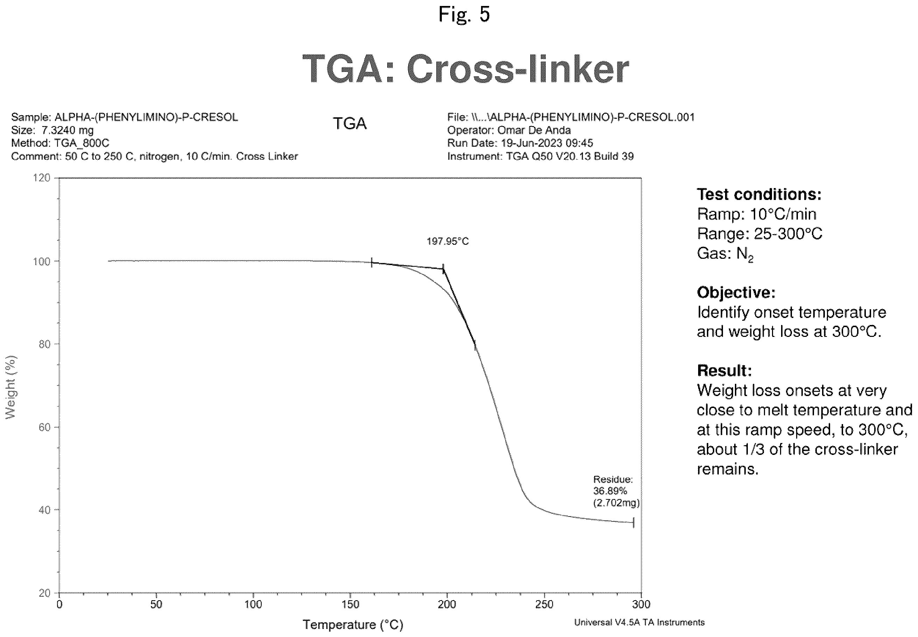

Fig. 5 shows results. It was found that the weight loss of the iminophenol compound started at a temperature that is very close to the melting temperature, and that, at this temperature increase rate, about 1/3 of the iminophenol compound (cross-linker) remained until the temperature reaches 300°C.

### <Differential scanning calorimetry (DSC) analysis of iminophenol compound (cross-linker)>

In order to identify the melting point (Tₘ) of the iminophenol compound, DSC analysis of the iminophenol compound was performed under the following test conditions.

### Test conditions:

Ramp (temperature increase rate): 10°C/min
Range: 25°C to 250°C
Gas: N₂

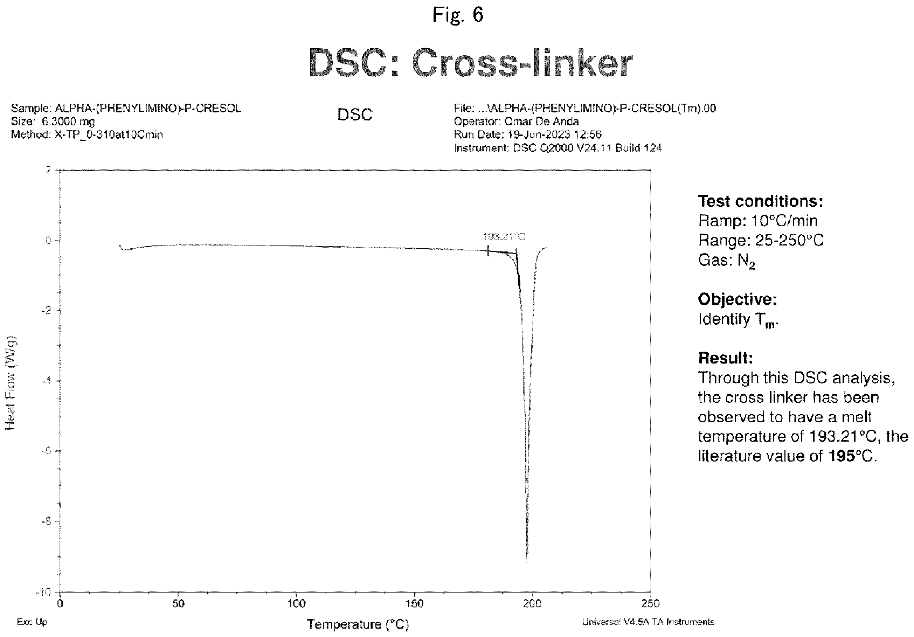

Fig. 6 shows results. By this DSC analysis, it was confirmed that the melting temperature of the iminophenol compound (cross-linker) was 193.21°C and the literature value was 195°C.

### <Differential scanning calorimetry (DSC) analysis of curable resin composition>

For the curable resin compositions having respective different contents of the iminophenol compound (cross-linker), DSC analysis was performed under the following test conditions in order to confirm the cure onset temperature.

### Test conditions:

Ramp (temperature increase rate): 10°C/min
Range: 25°C to 250°C
Gas: N₂

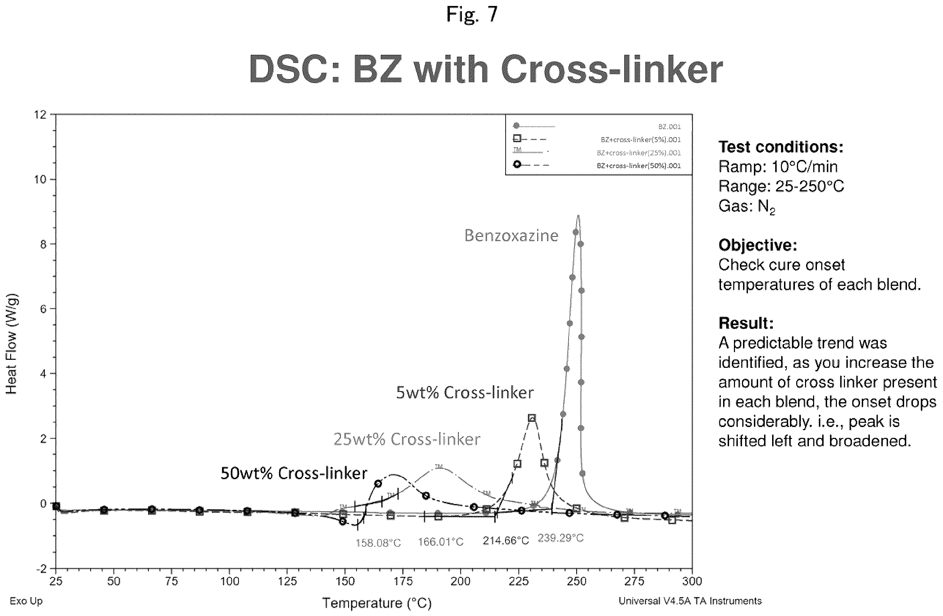

Fig. 7 shows results. As a predictable trend, it was confirmed that in a case where the content of the iminophenol compound (cross-linker) present in each mixture increased, the cure onset temperature significantly decreased, that is, the peak shifted to the left and the width of the peak broadened.

### <Melt viscosity measurement of curable resin composition>

For the curable resin compositions having respective different contents of the iminophenol compound (cross-linker), the melt viscosity was measured under the following test conditions.

### Test conditions:

Ramp (temperature increase rate): 5°C/min
Range: 50°C to 310°C

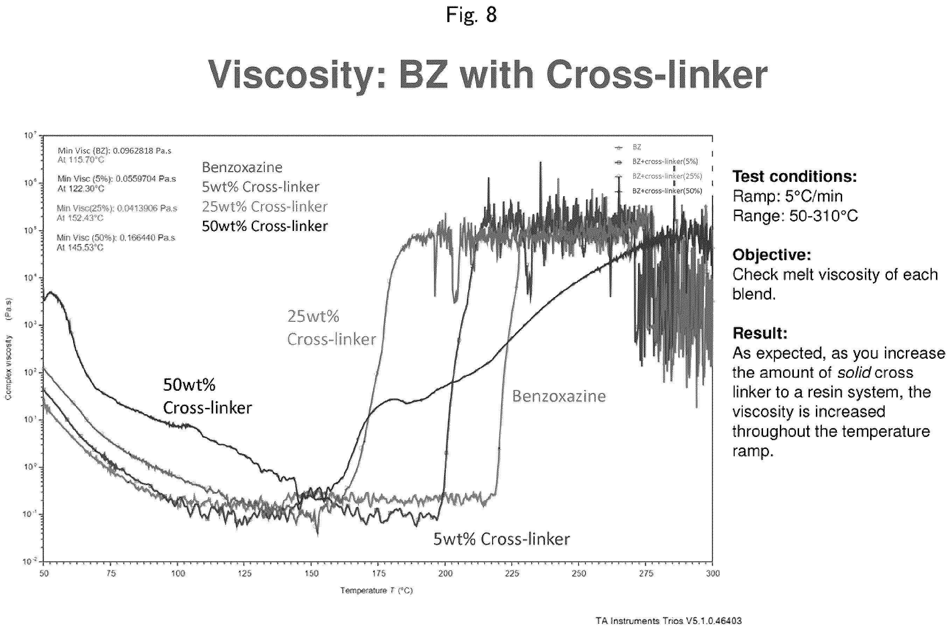

Fig. 8 shows results. As expected, it was confirmed that in a case where the amount of a solid cross-linker (iminophenol compound) relative to a resin system (the compound having a benzoxazine skeleton) was increased, the melt viscosity increased while the temperature increases.

### <Degree-of-cure measurement of curable resin composition>

The degree of cure of each of the curable resin compositions obtained in Examples was measured under the following test conditions.

### Test conditions:

Ramp (temperature increase rate): 10°C/min
Range: 0°C to 350°C
Gas: N₂

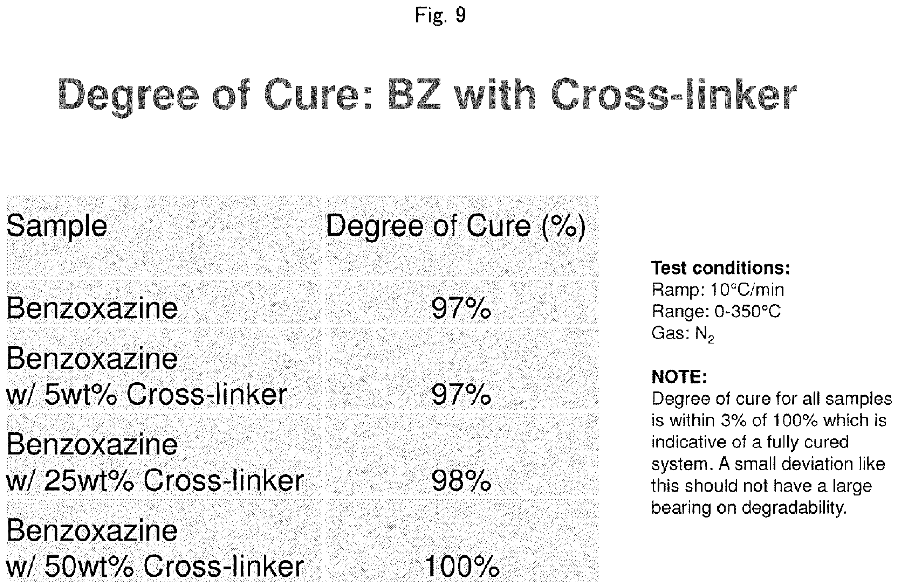

Fig. 9 shows results. In all samples, an uncured portion is within 3% of 100%. This indicates a fully cured system. Such a slight deviation should not have a large bearing on the degradability.

### Industrial Applicability

An aspect of the present invention can be applied to fields in which thermosetting resins are used.

## Claims

1. A benzoxazine monomer represented by general formula (I): 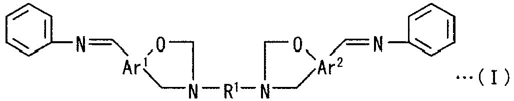 [wherein:
Ar¹ and Ar² each represent a trivalent aromatic group derived from a phenol compound (A);
Ar¹ and Ar² are identical to or different from each other; and
R¹ represents a divalent aromatic group derived from an aromatic diamine compound (B)].

2. The benzoxazine monomer according to claim 1, wherein in general formula (I), R¹ is a divalent aromatic group which is represented by one or more of general formulas (II) to (V): 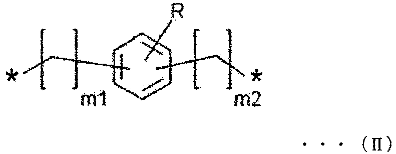 [wherein:
asterisks each represent a bonding site;
bonds to an aromatic ring, which form a main chain except a bond between R and the aromatic ring, are in meta- or para-position;
the R is a substituent on the aromatic ring and represents an aliphatic group having 1 to 10 carbon atoms, the number of Rs is 0 or 1 or more, and, in a case where the number of Rs is 2 or more, the Rs are identical to or different from each other; and
m1 and m2 each represent 0 or 1]; 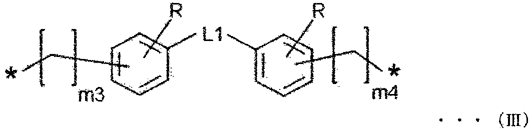 [wherein:
asterisks each represent a bonding site;
bonds to each of two aromatic rings, which form a main chain except bonds between Rs and the two aromatic rings, are in meta- or para-position;
L1 represents one or more of a single bond, an isopropylidene group, a sulfonyl group, a carbonyl group, a 9,9-fluorenyl group, an oxy group, and an alkylene group;
the Rs are substituents on the two aromatic rings and each represent an aliphatic group having 1 to 10 carbon atoms, the number of Rs on each of the two aromatic rings is 0 or 1 or more, and, in a case where the number of Rs is 2 or more, the Rs are identical to or different from each other; and
m3 and m4 each represent 0 or 1]; 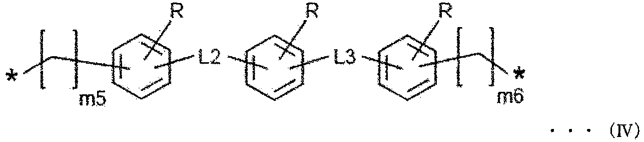 [wherein:
asterisks each represent a bonding site;
bonds to each of three aromatic rings, which form a main chain except bonds between Rs and the three aromatic rings, are in meta- or para-position;
L2 and L3 each represent an oxy group;
the Rs are substituents on the three aromatic rings and each represent an aliphatic group having 1 to 10 carbon atoms, the number of Rs on each of the three aromatic rings is 0 or 1 or more, and, in a case where the number of Rs is 2 or more, the Rs are identical to or different from each other; and
m5 and m6 each represent 0 or 1]; and 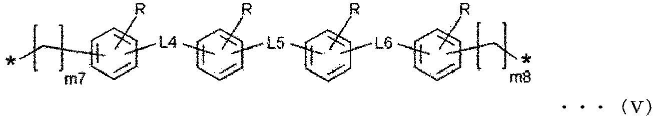 [wherein:
asterisks each represent a bonding site;
bonds to each of four aromatic rings, which form a main chain except bonds between Rs and the four aromatic rings, are in meta- or para-position;
L4 and L6 each represent an oxy group;
L5 represents one or more of a single bond, an isopropylidene group, a sulfonyl group, a carbonyl group, and a 9,9-fluorenyl group;
the Rs are substituents on the four aromatic rings and each represent an aliphatic group having 1 to 10 carbon atoms, the number of Rs on each of the four aromatic rings is 0 or 1 or more, and, in a case where the number of Rs is 2 or more, the Rs are identical to or different from each other; and
m7 and m8 each represent 0 or 1].

3. A composition comprising a benzoxazine monomer recited in claim 1.

4. The composition according to claim 3, further comprising a benzoxazine-based resin which is different from the benzoxazine monomer.

5. An uncured molded product obtained by molding a composition recited in claim 3 or 4.

6. A cured molded product obtained by curing a composition recited in claim 3 or 4.

7. A degradation product which is obtained by degrading a cured molded product recited in claim 6 under an acidic or basic condition and which is soluble in a solvent.

8. A method for producing a degradation product which is soluble in a solvent, the method comprising the step of degrading a cured molded product recited in claim 6 under an acidic or basic condition.

9. A prepreg or a semipreg each of which is obtained by impregnating reinforcement fibers with a composition recited in claim 3 or 4.

10. The cured molded product according to claim 6, further comprising reinforcement fibers.

11. A method for degrading a cured molded product, the method comprising the step of degrading a part other than reinforcement fibers of a cured molded product recited in claim 10 by bringing the cured molded product in contact with an acidic solution or a basic solution.

12. A method for recovering reinforcement fibers, the method comprising the steps of:
obtaining a degradation product and reinforcement fibers by degrading a cured molded product by a method for degrading a cured molded product recited in claim 11; and
recovering the reinforcement fibers which have been obtained in the step of obtaining the degradation product and the reinforcement fibers.

13. A curable resin composition comprising: a compound having a benzoxazine skeleton; and an iminophenol compound.

14. The curable resin composition according to claim 13, wherein the iminophenol compound is represented by the following general formula:

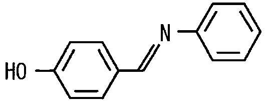

15. The curable resin composition according to claim 13 or 14, wherein the compound having a benzoxazine skeleton is at least one of a compound represented by the following general formula (1) and a compound represented by general formula (2) below: 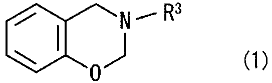
[wherein R³ is a monovalent organic group composed of 1 to 20 carbon atoms and a hydrogen atom]; and 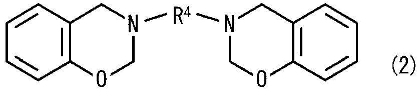
[wherein R⁴ is a divalent organic group composed of 1 to 30 carbon atoms and a hydrogen atom].

16. An uncured molded product obtained by molding a curable resin composition recited in claim 13.

17. A cured molded product obtained by curing and molding a curable resin composition recited in claim 13.

18. A degradation product which is obtained by degrading a cured molded product recited in claim 17 under an acidic or basic condition and which is soluble in a solvent.

19. A method for producing a degradation product which is soluble in a solvent, the method comprising the step of degrading a cured molded product recited in claim 17 under an acidic or basic condition.
